# EUROPÄISCHE PATENTSCHRIFT

(11) **EP 2 473 760 B1**
(45) Veröffentlichungstag und Bekanntmachung des Hinweises auf die Patenterteilung: **21.05.2014**
(21) Anmeldenummer: 10751620.5
(22) Anmeldetag: 31.08.2010
(51) Int. Cl.: F16H 25/20, H02K 7/06

(54) **LINEAREINHEIT**
LINEAR UNIT
UNITÉ LINÉAIRE

(30) Priorität: 01.09.2009 DE 102009029075; 30.08.2010 DE 102010039916
(43) Veröffentlichungstag der Anmeldung: 11.07.2012
(73) Patentinhaber: Continental Teves AG & Co. oHG, 60488 Frankfurt am Main (DE)
(72) Erfinder: DRUMM, Stefan A., 55291 Saulheim (DE)
(86) Internationale Anmeldenummer: PCT/EP2010/062672
(87) Internationale Veröffentlichungsnummer: WO 2011/026826

(56) Entgegenhaltungen:
- DE-A1- 4 229 042
- DE-A1- 10 306 430
- DE-A1- 19 740 867
- US-A- 4 865 162
- US-A1- 2006 266 146

## Beschreibung

Die Erfindung betrifft eine Lineareinheit gemäß dem Oberbegriff von Anspruch 1.

Eine derartige Lineareinheit ist aus der DE 197 40 867 A1 oder der DE 103 06 430 A1 bekannt. Die vorbekannte Betätigungseinheit ist für elektromechanisch betätigbare Scheibenbremsen geeignet, bei denen die Gewindemutter des Rotations-Translationsgetriebes sich an dem zu betätigenden Reibbelag abstützt.

Eine Lineareinheit ist aus der WO 89/03782 A1 bekannt. Bei der vorbekannten Lineareinheit wird das Rotations-Translationsgetriebe durch einen sog. Kugelgewindetrieb gebildet, dessen Gewindemutter unmittelbar mit dem Rotor des Elektromotors verbunden ist, während die Gewindespindel ihre translatorische Bewegung mittels eines als Druckstange ausgebildeten Endes auf eine der Lineareinheit nachgeschaltete Geberzylinderanordnung überträgt. Die hierfür notwendige Verdrehsicherung der Gewindespindel ist dadurch realisiert, dass das andere Ende der Gewindespindel abgeflacht ausgeführt ist und von einem entsprechend geformten Durchbruch des Elektromotor-Gehäuses aufgenommen wird. Als Nachteile der offenbarten Einheit werden deren komplizierter, mit hohen Fertigungskosten verbundener Aufbau und insbesondere die erhebliche axiale Baulänge empfunden.

Es ist daher Aufgabe der vorliegenden Erfindung, eine Lineareinheit, welche auch als hydraulischer Aktuator geeignet ist, bereitzustellen, deren Aufbau bei gleichzeitiger Reduzierung des erforderlichen Bauraums vereinfacht ist.

Diese Aufgabe wird erfindungsgemäß durch eine Lineareinheit gemäß Anspruch 1 gelöst.

Vorteilhafte Weiterbildungen des Erfindungsgegenstandes sind den Unteransprüchen entnehmbar.

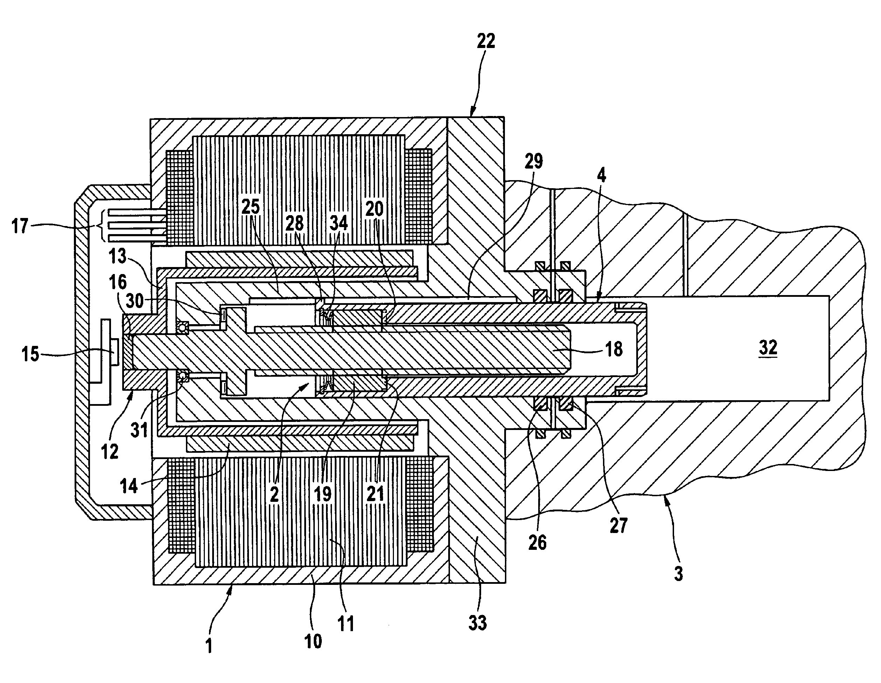

Die Erfindung wird nachfolgend im Zusammenhang mit der beiliegenden Zeichnung an einem Ausführungsbeispiel näher erläutert, wobei die einzige Figur der Zeichnung eine erfindungsgemäße Lineareinheit in einer Längsschnittdarstellung in zusammen gebautem, teilweise betätigtem Zustand zeigt.

Wie der Zeichnung zu entnehmen ist, besteht die erfindungsgemäße Lineareinheit im Wesentlichen aus zwei vormontierbaren Baugruppen, und zwar aus einem Elektromotor 1, und einer weiteren Baugruppe, mit einem Getriebegehäuse 22, das ein Rotations-Translationsgetriebe 2 sowie ein Kraftübertragungsglied 4 aufnimmt. Das Rotations-Translationsgetriebe 2 ist im gezeigten Ausführungsbeispiel als ein einfaches Bewegungsgewinde ausgebildet. Zur Herstellung einer funktionsfähigen Einheit werden die Baugruppen ineinander gesteckt und durch ein kraftschlüssiges Fixieren mittels nicht dargestellter Verbindungselemente miteinander verbunden. In einer Weiterbildung ist der erfindungsgemäße Aktuator als hydraulischer Aktuator ausgebildet, indem das Kraftübertragungsglied 4 gegenüber dem Getriebegehäuse 22 abgedichtet ist und als Kolbenstange fungiert. Zum Aufbau eines hydraulischen Drucks taucht das als Kolbenstange ausgebildete Kraftübertragungsglied 4 in eine flüssigkeitsgefüllte Bohrung 32 ein.

Der Elektromotor 1 weist ein Elektromotorgehäuse 10 auf, in dem ein Stator 11 sowie ein Rotor 12 angeordnet sind, die die Drehmoment gebenden Teile des Elektromotors 1 bilden. Der Rotor 12 besteht aus einer topfförmigen Hülse 13, an deren Oberfläche in regelmäßigen Winkelabständen Permanentmagnetsegmente 14 angeordnet sind. Zur Ermittlung der für ein phasenrichtiges Bestromen des Stators 11 benötigten Winkellage des Rotors 12 bzw. 13 ist ein berührungslos arbeitender Lagesensor 15 vorgesehen, der in der dargestellten Ausführung mit einem im Rotor 12 bzw. 13 angeordneten Magneten 16 zusammen wirkt und dessen Signale einer nicht dargestellten elektronischen Steuer- oder Regeleinheit zugeführt werden. Dem Anschluss der Statorwicklung an eine (nicht dargestellte) geeignete elektrische Stromquelle dienen am Wickelkopf ausgebildete elektrische Kontaktelemente 17, die vor einer Beschädigung beispielsweise durch einen Deckel geschützt sind.

Das vorhin erwähnte Rotations-Translationsgetriebe 2 dient der Umwandlung der vom Rotor 12 des Elektromotors 1 ausgeführten Drehbewegung in eine translatorische Bewegung des Kraftübertragungsglieds 4. Zu diesem Zweck weist es ein Getriebegehäuse 22, eine Gewindespindel 18, sowie eine mit der Gewindespindel 18 im Eingriff stehende Gewindemutter 19 auf, die im Kolben 4 nicht drehbar angeordnet ist. Dabei steht die Gewindemutter 19 mit dem Kraftübertragungsglied 4 mittels einer Kronen-Verzahnung 20, 21 im Eingriff, die durch je einen an der Gewindemutter 19 sowie einen am Kraftübertragungsglied 4 ausgebildeten verzahnten Bereich 20, 21 gebildet ist. Der ständige Eingriff der verzahnten Bereiche 20, 21 wird durch ein in axialer Richtung wirkendes Federelement gesichert, das sich am Kolben 4 axial abstützt und das im gezeigten Beispiel als ein Tellerfederpaket 34 ausgeführt ist. Anstelle des dargestellten, das Rotations-Translationsgetriebe bildenden einfachen Bewegungsgewindes kann selbstverständlich auch jedes andere Rotations-Translationsgetriebe, wie beispielsweise ein Kugelgewindetrieb oder ein Rollengewindetrieb eingesetzt werden.

Wie der Zeichnung weiterhin zu entnehmen ist, umgreift die den Rotor 12 bildende Hülse 13 radial einen topfförmig ausgebildeten Abschnitt 25 des Getriebegehäuses 22. An einem radialen Flansch 33 des Getriebegehäuses 22 stützen sich einerseits das Geberzylindergehäuse 3 und andererseits das Gehäuse 10 des Elektromotors 1 axial ab. Der Abschnitt 25 nimmt das Rotations-Translationsgetriebe 2 sowie das Kraftübertragungsglied bzw. Kolben 4 auf und weist an seinem der Geberzylinder-Kolben-Anordnung 3, 4 zugewandten Ende zwei unbeweglich angeordnete Dichtelemente 26, 27 auf, wobei der topfförmige Abschnitt 25 eine Führung des Kraftübertragungsglieds bzw. Kolbens 4 in radialer Richtung bildet. An seinem dem Geberzylindergehäuse 3 abgewandten Ende weist das Kraftübertragungsglied 4 mehrere radiale Vorsprünge auf, von denen einer dargestellt und mit dem Bezugszeichen 28 versehen ist. Die Vorsprünge 28, - bilden zusammen mit im topfförmigen Abschnitt 25 ausgebildeten Längsschlitzen 29 eine Verdrehsicherung des Kolbens 4 im topfförmigen Abschnitt 25.

Schließlich ist aus der Zeichnung ersichtlich, dass sich die Gewindespindel 18 an einem im topfförmigen Abschnitt 25 angeordneten Axiallager 30 abstützt, während deren der Geberzylinder-Kolben-Anordnung 3, 4 abgewandtes Ende in einem im topfförmigen Abschnitt 25 vorgesehenen Radiallager 31 geführt und in drehmomentübertragender Verbindung mit dem Rotor 12 bzw. 13 steht.

Die Funktionsweise der erfindungsgemäß aufgebauten Lineareinheit ergibt sich im Prinzip für einen auf dem einschlägigen technischen Gebiet tätigen Fachmann aus dem Offenbarungsgehalt der vorliegenden Anmeldung. Bei einer Betätigung der gezeigten Anordnung bzw. einer Bestromung des Elektromotors 1 wird der topfförmige Rotor 12 bzw. 13 in eine Drehbewegung versetzt, die auf die Gewindespindel 18 übertragen wird. Durch die Rotationsbewegung der Gewindespindel 18 erfolgt eine Verschiebebewegung der Gewindemutter 19 in der Zeichnung nach rechts, bei der das Kraftübertragungselement bzw. Kolben 4 ebenfalls nach rechts verschoben wird, wodurch in einem vom Kolben 4 im Gehäuse 3 begrenzten Druckraum 32 ein hydraulischer Druck aufgebaut wird, der über einen Druckanschluss an einen nicht gezeigten hydraulischen Verbraucher, beispielsweise eine hydraulische Bremsanlage eines Kraftfahrzeuges, weiter geleistet wird.

## Patentansprüche

1. Lineareinheit zum Aufbringen einer axial wirkenden Kraft bestehend aus einem Rotations-Translationsgetriebe (2), das eine Gewindespindel (18) sowie eine Gewindemutter (19) aufweist, die in einem Getriebegehäuse (22) angeordnet sind, sowie aus einem Elektromotor (1) mit einem Rotor (12) sowie einem Stator (11), die in einem Elektromotorgehäuse (10) angeordnet sind, wobei die Gewindespindel (18) im Inneren des Getriebegehäuses (22) drehbar und axial fest gelagert sowie außerhalb des Getriebegehäuses (22) mit dem Rotor (12) verbunden ist, wobei der Rotor (12) des Elektromotors (1) als Hohlwelle ausgebildet ist und das Getriebegehäuse (22) einen topfförmig ausgebildeten Abschnitt (25) aufweist, der vom Rotor (12) umschlossen wird, **dadurch gekennzeichnet, dass** der topfförmig ausgebildete Abschnitt (25) des Getriebegehäuses (22) ein Kraftübertragungsglied (4), die Gewindemutter (19) und die Gewindespindel (18) umgreift und das Kraftübertragungsglied (4) im topfförmig ausgebildeten Abschnitt (25) des Getriebegehäuses (22) axial beweglich geführt und im topfförmig ausgebildeten Abschnitt (25) gegen ein Verdrehen gesichert ist.

2. Lineareinheit nach Anspruch 1, **dadurch gekennzeichnet, dass** die Gewindemutter (19) sich in Betätigungsrichtung über eine axiale Kontaktkraft am Kraftübertragungsglied (4) abstützt, wobei eine Verdrehung der Gewindemutter (19) relativ zum Kraftübertragungsglied (4) gesperrt ist.

3. Lineareinheit nach Anspruch 2, **dadurch gekennzeichnet, dass** die Sperrung der Verdrehung der Gewindemutter (19) relativ zum Kraftübertragungsglied (4) durch eine Kronen-Verzahnung (20, 21) zwischen Gewindemutter (19) und Kraftübertragungsglied (4) erfolgt.

4. Lineareinheit nach einem der Ansprüche 2 oder 3, **dadurch gekennzeichnet, dass** die Sperrung der Verdrehung der Gewindemutter (19) relativ zum Kraftübertragungsglied (4) beim Auftreten einer axialen Zugkraft zwischen Gewindemutter (19) und Kraftübertragungsglied (4) aufgehoben wird.

5. Lineareinheit nach Anspruch 4, **dadurch gekennzeichnet, dass** beim Zurückfahren der Lineareinheit in ihre Nulllage ein axialer Anschlag des Kraftübertragungsglieds (4) im Getriebegehäuse (22) die axiale Zugkraft zwischen Gewindemutter (19) und Kraftübertragungsglied (4) erzeugt, die zu einer Trennung von Gewindemutter (19) und Kraftübertragungsglied (4) führt.

6. Lineareinheit nach einem der Ansprüche 1 bis 5, **dadurch gekennzeichnet, dass** das Kraftübertragungsglied (4) als eine hydraulische Kolbenstange ausgebildet ist, die gegen das Getriebegehäuse (22) abgedichtet ist.

7. Lineareinheit nach einem der Ansprüche 1 bis 6, **dadurch gekennzeichnet, dass** die Verdrehsicherung (28, 29) durch am Kraftübertragungsglied (4) ausgebildete radiale Vorsprünge (28) sowie in der inneren Wand des topffförmigen Abschnitts (25) ausgebildete Längsschlitze (29) gebildet ist, in die die Vorsprünge (28) eingreifen.

8. Lineareinheit nach einem der Ansprüche 1 bis 5, **dadurch gekennzeichnet, dass** am Boden des topfförmigen Abschnitts (25) ein Axiallager (30) angeordnet ist, an dem sich die Gewindespindel (18) abstützt.

9. Lineareinheit nach Anspruch 3, **dadurch gekennzeichnet, dass** zwischen der Gewindemutter (19) und dem Kraftübertragungsglied (4) ein axial wirkendes Federelement (34) vorgesehen ist, das die Kronen-Verzahnung (20, 21) im Eingriff hält.

10. Lineareinheit nach einem der vorhergehenden Ansprüche, **dadurch gekennzeichnet, dass** im topfförmigen Abschnitt (25) ein Radiallager (31) angeordnet ist, in dem ein Ende der Gewindespindel (18) gelagert ist.

11. Lineareinheit nach einem der vorhergehenden Ansprüche, **dadurch gekennzeichnet, dass** eine Einrichtung (15, 16) zum Erfassen der Rotorlage des Elektromotors (1) vorgesehen ist.

12. Lineareinheit nach Anspruch 11, **dadurch gekennzeichnet, dass** die Einrichtung (15, 16) zum Erfassen der Rotorlage als eine berührungslos arbeitende Sensoranordnung ausgebildet ist, die aus einem auf der Längsachse der Lineareinheit angeordneten Positionsgeber (16) sowie einem nicht beweglichen Positionssensorelement (15) besteht.

## Claims

1. Linear unit for applying an axially acting force, composed of a rotational/translational gear (2) which has a threaded spindle (18) and a threaded nut (19) which are arranged in a gear housing (22), and of an electric motor (1) with a rotor (12) and with a stator (11) which are arranged in an electric motor housing (10), the threaded spindle (18) being mounted rotatably and axially fixedly inside the gear housing (22) and being connected to the rotor (12) outside the gear housing (22), the rotor (12) of the electric motor (1) being designed as a hollow shaft, and the gear housing (22) having a portion (25) of pot-shaped design which is surrounded by the rotor (12), **characterized in that** the portion (25) of pot-shaped design of the gear housing (22) surrounds a force transmission member (4), the threaded nut (19) and the threaded spindle (18) and the force transmission member (4) is guided axially movably in the portion (25) of pot-shaped design of the gear housing (22) and is secured against rotation in the portion (25) of pot-shaped design.

2. Linear unit according to Claim 1, **characterized in that** the threaded nut (19) is supported in the direction of actuation on the force transmission member (4) via an axial contact force, a rotation of the threaded nut (19) in relation to the force transmission member (4) being blocked.

3. Linear unit according to Claim 2, **characterized in that** the blocking of the rotation of the threaded nut (19) in relation to the force transmission member (4) takes place by means of contrate toothing (20, 21) between the threaded nut (19) and force transmission member (4).

4. Linear unit according to either one of Claims 2 and 3, **characterized in that** the blocking of the rotation of the threaded nut (19) in relation to the force transmission member (4) is cancelled when an axial tractive force occurs between the threaded nut (19) and force transmission member (4).

5. Linear unit according to Claim 4, **characterized in that**, when the linear unit moves back into its neutral position, an axial stop of the force transmission member (4) in the gear housing (22) generates the axial tractive force between the threaded nut (19) and force transmission member (4), said axial tractive force leading to a separation of the threaded nut (19) and force transmission member (4).

6. Linear unit according to one of Claims 1 to 5, **characterized in that** the force transmission member (4) is designed as a hydraulic piston rod which is sealed off with respect to the gear housing (22).

7. Linear unit according to one of Claims 1 to 6, **characterized in that** the device for securing against rotation (28, 29) is formed by radial projections (28) formed on the force transmission member (4) and by longitudinal slots (29) which are formed in the inner wall of the pot-shaped portion (25) and into which the projections (28) engage.

8. Linear unit according to one of Claims 1 to 5, **characterized in that** an axial bearing (30), on which the threaded spindle (18) is supported, is arranged on the bottom of the pot-shaped portion (25).

9. Linear unit according to Claim 3, **characterized in that** an axially acting spring element (34) which keeps the contrate toothing (20, 21) in engagement is provided between the threaded nut (19) and the force transmission member (4).

10. Linear unit according to one of the preceding claims, **characterized in that** a radial bearing (31) in which one end of the threaded spindle (18) is mounted is arranged in the pot-shaped portion (25).

11. Linear unit according to one of the preceding claims, **characterized in that** a device (15, 16) for detecting the rotor position of the electric motor (1) is provided.

12. Linear unit according to Claim 11, **characterized in that** the device (15, 16) for detecting the rotor position is designed as a contactlessly operating sensor arrangement which is composed of a position transmitter (16) arranged on the longitudinal axis of the linear unit and of an immovable position sensor element (15).

## Revendications

1. Unité linéaire destinée à appliquer une force agissant axialement, constituée d'une transmission à rotation-translation (2) qui présente une broche filetée (18) ainsi qu'un écrou fileté (19), lesquels sont disposés dans un boîtier de transmission (22), ainsi que d'un moteur électrique (1) avec un rotor (12) et un stator (11), qui sont disposés dans un boîtier de moteur électrique (10), la broche filetée (18) étant montée à l'intérieur du boîtier de transmission (22) de manière rotative et fixée axialement et étant connectée à l'extérieur du boîtier de transmission (22) au rotor (12), le rotor (12) du moteur électrique (1) étant réalisé sous forme d'arbre creux et le boîtier de transmission (22) présentant une portion (25) réalisée en forme de pot qui est entourée par le rotor (12), **caractérisée en ce que** la portion (25) réalisée en forme de pot du boîtier de transmission (22) vient en prise autour d'un organe de transfert de force (4), de l'écrou fileté (19) et de la broche filetée (18), et l'organe de transfert de force (4) est guidé de manière déplaçable axialement dans la portion (25) réalisée en forme de pot du boîtier de transmission (22) et est immobilisé en rotation dans la portion (25) réalisée en forme de pot.

2. Unité linéaire selon la revendication 1, **caractérisée en ce que** l'écrou fileté (19) s'appuie dans la direction d'actionnement par le biais d'une force de contact axiale contre l'organe de transfert de force (4), une rotation de l'écrou fileté (19) par rapport à l'organe de transfert de force (4) étant bloquée.

3. Unité linéaire selon la revendication 2, **caractérisée en ce que** le blocage de la rotation de l'écrou fileté (19) par rapport à l'organe de transfert de force (4) s'effectue par une couronne dentée (20, 21) entre l'écrou fileté (19) et l'organe de transfert de force (4).

4. Unité linéaire selon l'une quelconque des revendications 2 ou 3, **caractérisée en ce que** le blocage de la rotation de l'écrou fileté (19) par rapport à l'organe de transfert de force (4) est supprimé en présence d'une force de traction axiale entre l'écrou fileté (19) et l'organe de transfert de force (4).

5. Unité linéaire selon la revendication 4, **caractérisée en ce que** lors du retour de l'unité linéaire dans sa position nulle, une butée axiale de l'organe de transfert de force (4) dans le boîtier de transmission (22) produit la force de traction axiale entre l'écrou fileté (19) et l'organe de transfert de force (4), laquelle conduit à une séparation de l'écrou fileté (19) et de l'organe de transfert de force (4).

6. Unité linéaire selon l'une quelconque des revendications 1 à 5, **caractérisée en ce que** l'organe de transfert de force (4) est réalisé sous forme de tige de piston hydraulique, qui est scellée hermétiquement par rapport au boîtier de transmission (22).

7. Unité linéaire selon l'une quelconque des revendications 1 à 6, **caractérisée en ce que** la fixation contre la rotation (28, 29) est formée par des saillies radiales (28) réalisées sur l'organe de transfert de force (4) ainsi que par des fentes longitudinales (29) réalisées dans la paroi interne de la portion (25) en forme de pot, dans lesquelles s'engagent les saillies (28).

8. Unité linéaire selon l'une quelconque des revendications 1 à 5, **caractérisée en ce qu'**au fond de la portion (25) en forme de pot est disposé un palier axial (30) sur lequel s'appuie la broche filetée (18).

9. Unité linéaire selon la revendication 3, **caractérisée en ce qu'**entre l'écrou fileté (19) et l'organe de transfert de force (4) est prévu un élément de ressort agissant axialement (34) qui maintient en prise la couronne dentée (20, 21).

10. Unité linéaire selon l'une quelconque des revendications précédentes, **caractérisée en ce que** dans la portion (25) en forme de pot est disposé un palier radial (31) dans lequel est supportée une extrémité de la broche filetée (18).

11. Unité linéaire selon l'une quelconque des revendications précédentes, **caractérisée en ce qu'**un dispositif (15, 16) est prévu pour détecter la position du rotor du moteur électrique (1).

12. Unité linéaire selon la revendication 11, **caractérisée en ce que** le dispositif (15, 16) est réalisé pour détecter la position du rotor en tant qu'agencement de capteur fonctionnant sans contact, qui se compose d'un capteur de position (16) disposé sur l'axe longitudinal de l'unité linéaire ainsi que d'un élément de capteur de position non déplaçable (15).
